# EUROPEAN PATENT APPLICATION

(11) **EP 4 778 900 A1**
(43) Date of publication of application: **22.07.2026**
(21) Application number: 24865489.9
(22) Date of filing: 11.09.2024
(51) Int. Cl.: C03C 25/12, C03C 25/1065, C03C 25/16, C03C 25/6226, G02B 6/44

(54) **OPTICAL FIBER MANUFACTURING DEVICE AND MANUFACTURING METHOD**

(30) Priority: 12.09.2023 JP 2023147798
(71) Applicant: Sumitomo Electric Industries, Ltd., Osaka-shi, Osaka 541-0041 (JP)
(72) Inventor: IIDA, Soichiro, Osaka-shi, Osaka 541-0041 (JP)
(74) Representative: TBK
(86) International application number: PCT/JP2024/032595
(87) International publication number: WO 2025/057989

(57) **Abstract**

This optical fiber manufacturing device comprises: a drawing tower including a drawing furnace for heating an optical fiber preform, and a coating part for coating a drawn glass fiber with an ultraviolet curable resin; a direct-under roller for changing a direction of a travel path of the coated optical fiber; a plurality of guide rollers for respectively guiding the optical fibers fed from the direct-under roller; an ultraviolet irradiation device for irradiating the coated ultraviolet curable resin with ultraviolet rays to cure the ultraviolet curable resin; and a withdraw part for withdrawing the optical fibers guided by the guide rollers. The ultraviolet irradiation device is arranged on a downstream side of the drawing tower, and operates so as to form a state in which the travel path is exposed and a state in which the travel path is surrounded and ultraviolet rays are radiated toward the travel path.

## Description

### TECHNICAL FIELD

The present disclosure relates to an apparatus and a method for manufacturing an optical fiber.

The present application claims priority based on Japanese Patent Application No. 2023-147798, filed on September 12, 2023, the entire content of which is incorporated herein by reference.

### BACKGROUND ART

In a general method for manufacturing (drawing) an optical fiber, a tip of a glass preform for an optical fiber (hereinafter, referred to as an optical fiber preform) is heated and softened, and the softened portion is drawn by applying a tensile strength thereto, thereby obtaining a small-diameter glass fiber. Next, the small-diameter glass fiber passes through a so-called drawing tower apparatus that performs a cooling step, a coating step including application and curing of a resin, and the like to obtain an optical fiber coated with the glass fiber, is guided by a direct-under roller or a guide roller, and is taken up to the downstream side of a pass line thereof by a take-up device to be wound up around a bobbin or the like.

The resin coating of the optical fiber is formed on an outer side surface of the optical fiber bare wire formed of glass to protect the optical fiber bare wire from an external impact or the like. As this coating step, a step of forming a primary coating (primary: a coating formed by curing an inner-layer resin) and a secondary coating (secondary: a coating formed by curing an outer-layer resin) on the outer side surface of the optical fiber bare wire is disclosed (refer to Patent Literature 1).

### CITATION LIST

### PATENT LITERATURE

Patent Literature 1: JP2019-64855A

### SUMMARY OF INVENTION

### SOLUTION TO PROBLEM

(1) According to the present disclosure, there is provided an optical fiber manufacturing apparatus including: a drawing tower including a drawing furnace that heats an optical fiber preform and an application unit that applies an ultraviolet curable resin to the drawn glass fiber; a direct-under roller that changes a direction of a traveling path of the applied optical fiber; a plurality of guide rollers that guide each of the optical fibers transmitted from the direct-under roller; an ultraviolet light irradiation device that irradiates the applied ultraviolet curable resin with ultraviolet light to cure the ultraviolet curable resin; and a take-up unit that takes up the optical fiber guided by the guide roller, in which the ultraviolet light irradiation device is disposed downstream of the drawing tower, and operates to form a state where the traveling path is exposed and a state where the ultraviolet light irradiation device surrounds the traveling path and irradiates the traveling path with ultraviolet light.

In addition, according to the present disclosure, there is provided a method for manufacturing an optical fiber using an apparatus for manufacturing an optical fiber including a drawing furnace that heats an optical fiber preform, a coating device that coats the drawn glass fiber with a resin, a direct-under roller that changes a direction of a traveling line of the coated optical fiber, a plurality of guide rollers that guide each of the optical fibers transmitted from the direct-under roller, and a take-up device that takes up the optical fiber guided by the guide roller in this order, the method including: disposing the drawn optical fiber in all steps of a traveling path of the apparatus for manufacturing an optical fiber, operating an ultraviolet light irradiation device such that the ultraviolet light irradiation device surrounds the optical fiber taken out downward from the coating device, and irradiating the optical fiber with ultraviolet light.

### BRIEF DESCRIPTION OF DRAWINGS

FIG. 1 is a schematic diagram illustrating an optical fiber manufacturing apparatus according to one aspect of the present disclosure.
FIG. 2 is a cross-sectional view illustrating an optical fiber according to the aspect of the present disclosure.
FIG. 3A is a configuration diagram illustrating an ultraviolet light irradiation device according to the aspect of the present disclosure.
FIG. 3B is a configuration diagram illustrating the ultraviolet light irradiation device according to the aspect of the present disclosure.
FIG. 3C is a configuration diagram illustrating the ultraviolet light irradiation device according to the aspect of the present disclosure.

### DESCRIPTIONS OF EMBODIMENTS

### Technical Problem

As described above, since the drawing tower apparatus includes the series of steps of transmitting the optical fiber downward in the vertical direction, a certain height is required. However, due to a factory layout, a building, and the like, a space in a height direction of a drawing tower where the optical fiber manufacturing apparatus is installed is limited. Therefore, a sufficient space is not secured in the curing step of performing the ultraviolet irradiation in the coating step of the resin corresponding to the final step of the drawing tower, making it difficult to ensure a time and irradiation energy relating to curing.

That is, since the space of the curing step is limited, the number of ultraviolet light irradiation devices (UV lamps, LEDs, and the like) that can be installed in the space is limited, and the ultraviolet irradiation power is insufficient. In order to sufficiently cure the resin, there is a limit in increasing the linear velocity of drawing the optical fiber.

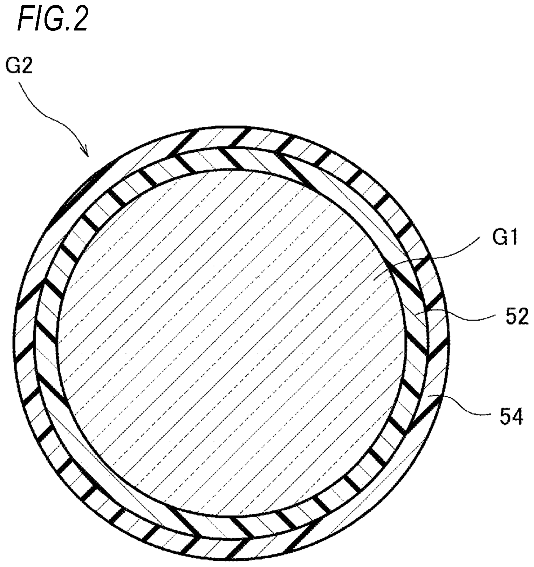

In order to compensate for the above-described problem, the technique disclosed in Patent Literature 1 has a configuration in which a secondary irradiation unit is disposed immediately before a winding-up drum to cure the resin as illustrated in FIG. 2 of Patent Literature 1. However, since the optical fiber comes into contact with a capstan or many rollers until the winding-up drum, the fiber coating may be deformed.

In addition, when the ultraviolet light irradiation device of the curing step is disposed in the entire layout in advance, there is a problem in that it is difficult to adjust a relative positional relationship between the traveling path of the wound optical fiber and the ultraviolet light irradiation device.

The present disclosure has been made under these circumstances, and an object thereof is to realize a reliable resin curing step in an optical fiber manufacturing apparatus where an installation space is limited, and to provide an optical fiber manufacturing apparatus and manufacturing method for realizing productivity and flexibility of a layout.

### Effect of Present Disclosure

According to the present disclosure, it is possible is to realize a reliable resin curing step in an optical fiber manufacturing apparatus where an installation space is limited such that a height of a drawing tower is limited, and to provide an optical fiber manufacturing apparatus and manufacturing method for realizing improvement of productivity and flexibility of a layout by improving a linear velocity.

### Description of Embodiment of Present Disclosure

First, embodiments of the present disclosure will be described.
(1) According to one embodiment of the present disclosure, there is provided an optical fiber manufacturing apparatus including: a drawing tower including: a drawing furnace configured to heat an optical fiber preform; and an application unit configured to apply an ultraviolet curable resin to the drawn glass fiber; a direct-under roller configured to change a direction of a traveling path of the applied optical fiber; a plurality of guide rollers configured to guide each of the optical fibers transmitted from the direct-under roller; an ultraviolet light irradiation device configured to irradiate the applied ultraviolet curable resin with ultraviolet light to cure the ultraviolet curable resin; and a take-up unit configured to take up the optical fiber guided by the guide roller, in which the ultraviolet light irradiation device is disposed downstream of the drawing tower, and operates to form a state where the traveling path is exposed and a state where the ultraviolet light irradiation device surrounds the traveling path and irradiates the traveling path with ultraviolet light.

With this configuration, the ultraviolet light irradiation device operates to form a state where the traveling path is exposed and a state where the ultraviolet light irradiation device surrounds the traveling path and irradiates the traveling path with ultraviolet light. Thus, after drawing, the ultraviolet light irradiation device can be disposed to surround the optical fiber to which the resin is applied. Therefore, instead of the drawing tower where the space is limited, the ultraviolet light irradiation device can be installed on a pass line (traveling path) downstream of the drawing tower. Since the utilization of the space can be improved, LEDs and the like for performing sufficient irradiation with ultraviolet light to cure the resin can be disposed to increase the linear velocity of drawing and to improve productivity. In addition, after checking the position of the drawn optical fiber, the ultraviolet light irradiation device can be disposed such that irradiation with ultraviolet light can be reliably performed.

It is noted that the operation described herein is not limited as long as it can realize both the state where the traveling path is exposed and the state where the ultraviolet light irradiation device surrounds the traveling path and irradiates the traveling path with ultraviolet light.

(2) In the optical fiber manufacturing apparatus according to (1), the ultraviolet light irradiation device can be configured to be disposed upstream of the direct-under roller.

With this configuration, the coating can be cured before contact with the direct-under roller. Therefore, the outer shape of the optical fiber can be maintained, and deformation of the optical fiber in the subsequent traveling path can be suppressed.

(3) In the optical fiber manufacturing apparatus according to (1), the ultraviolet light irradiation device can be configured to be disposed downstream of the direct-under roller.

With this configuration, minimum curing for suppressing deformation of the optical fiber is performed before the optical fiber passes through the direct-under roller, and additional curing is performed after the optical fiber passes through the direct-under roller. As a result, productivity can be further improved.

(4) In the optical fiber manufacturing apparatus according to any one of (1) to (3), in the operation, the ultraviolet light irradiation device can be configured to be movable between a position surrounding the traveling path and a position where the traveling path is exposed.

With this configuration, as one operation configuration, the ultraviolet light irradiation device is movable between the position surrounding the traveling path and the position where the traveling path is exposed. As a result, the resin of the drawn optical fiber can be reliably irradiated with ultraviolet light. It is noted that the movement described herein can be realized by, for example, two linear movements perpendicular to each other, in which a rectangular parallelepiped housing provided with an ultraviolet light source therein is halved in the vertical direction along the drawing, the ultraviolet light irradiation device is moved to the position of the drawn optical fiber in the halved state, and the ultraviolet light irradiation device is moved to close the halved portions and to surround the optical fiber. Due to the operation configuration (movement configuration), the ultraviolet light irradiation device can be provided using a small space even after the installation of the drawing tower.

(5) In the optical fiber manufacturing apparatus according to any one of (1) to (3), the ultraviolet light irradiation device can be configured to be formed of two half-tubular housings, the traveling path is exposed in a halved state, and the ultraviolet light irradiation device can be configured to operate to be pivotably opened and closed to irradiate the traveling path with ultraviolet light in a state where both of the half-tubular housings are combined.

With this configuration, in the ultraviolet light irradiation device formed of two half-tubular housings, the traveling path is exposed in the halved state, and the pivotable opening and closing operation or the linear movement using a guide or the like where the traveling path is irradiated with ultraviolet light in a state where both of the half-tubular housings are combined can be realized. In this configuration, since the utilization of the space can be improved, LEDs and the like for performing sufficient irradiation with ultraviolet light to cure the resin can be disposed to increase the linear velocity of drawing and to improve productivity.

(6) In the optical fiber manufacturing apparatus according to any of (1) to (3), the ultraviolet light irradiation device includes an ultraviolet light source and a mirror, and the ultraviolet light source and the mirror can be configured to be disposed such that the optical fiber of the traveling path is capable of being irradiated with ultraviolet light from all directions.

With this configuration, not only the irradiation device but also the mirror that reflects ultraviolet light are provided. As a result, there is no unevenness in ultraviolet light to be irradiated, the reliable curing of the resin can be expected, and the energy can be efficiently utilized.

(7) In the optical fiber manufacturing apparatus according to any one of (1) to (3), the ultraviolet light source of the ultraviolet light irradiation device can be configured to be a light emitting diode (LED).

With this configuration, the light emitting diode is used as the light source for ultraviolet light irradiation. As a result, for example, air cooling can be performed, and the installation space can be made compact. In addition, regarding the relative position between the light source or the like of ultraviolet irradiation and the drawn optical fiber, in order to efficiently impart the ultraviolet irradiation power to the optical fiber, it is desirable that a base unit provided with the light source or the like includes a mechanism for finely adjusting the horizontal position and a mechanism for adjusting perpendicularity to the fiber.

(8) According to one embodiment of the present disclosure, there is provided a method for manufacturing an optical fiber using an apparatus for manufacturing an optical fiber including: a drawing furnace configured to heat an optical fiber preform; a coating device configured to coat the drawn glass fiber with a resin; a direct-under roller configured to change a direction of a traveling line of the coated optical fiber; a plurality of guide rollers configured to guide each of the optical fibers transmitted from the direct-under roller; and a take-up device configured to take up the optical fiber guided by the guide roller in this order, the method including: disposing the drawn optical fiber in all steps of a traveling path of the apparatus for manufacturing an optical fiber, operating an ultraviolet light irradiation device such that the ultraviolet light irradiation device surrounds the optical fiber taken out downward from the coating device, and irradiating the optical fiber with ultraviolet light.

In the optical fiber manufacturing method, after disposing the drawn optical fiber in all steps of the traveling path of the manufacturing apparatus, the ultraviolet light irradiation device can operate such that the ultraviolet light irradiation device surrounds the optical fiber taken out downward from the coating device. Thus, after drawing, the ultraviolet light irradiation device can be disposed to surround the optical fiber to which the resin is applied. Therefore, instead of the drawing tower where the space is limited, the ultraviolet light irradiation device can be installed on a pass line (traveling path) downstream of the drawing tower. Since the utilization of the space can be improved, LEDs and the like for performing sufficient irradiation with ultraviolet light to cure the resin can be disposed to increase the linear velocity of drawing and to improve productivity. In addition, after checking the position of the drawn optical fiber, the ultraviolet light irradiation device can be disposed such that irradiation with ultraviolet light can be reliably performed.

### Details of Embodiment of Present Disclosure

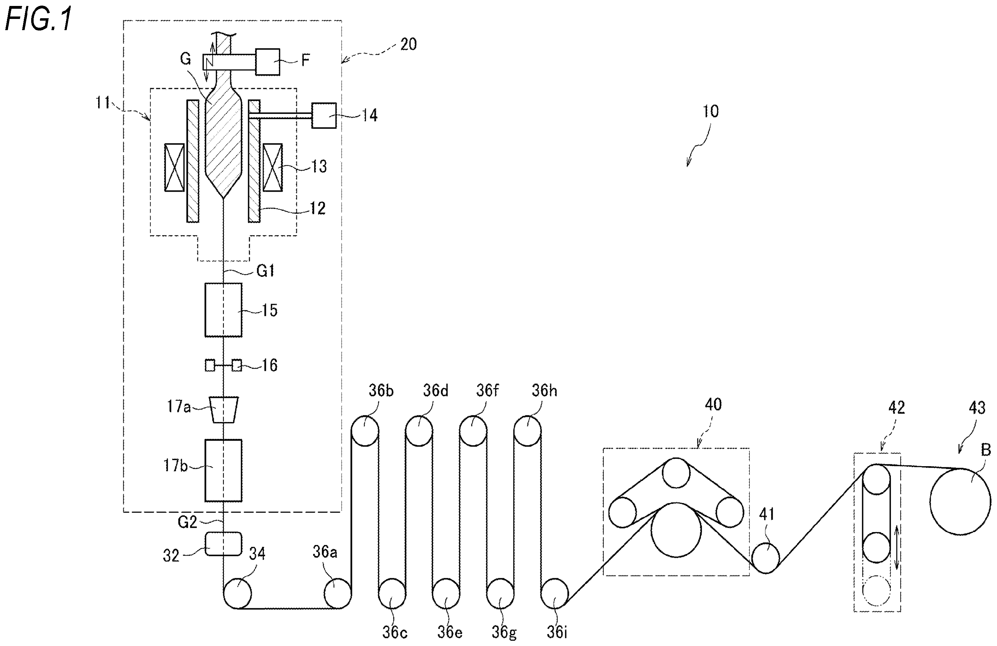

Hereinafter, a specific example of the apparatus for manufacturing an optical fiber according to the present disclosure will be described with reference to the drawings. FIG. 1 is a schematic diagram illustrating an apparatus for manufacturing an optical fiber according to one aspect of the present disclosure. FIG. 2 is a cross-sectional view illustrating an optical fiber according to the aspect of the present disclosure. As illustrated in FIG. 1, an optical fiber manufacturing apparatus 10 includes a drawing furnace 11 that heats and softens an optical fiber preform G at an uppermost position.

The drawing furnace 11 includes a cylindrical furnace tube 12 into which the optical fiber preform G is supplied, a heating element 13 that surrounds the furnace tube 12, and a gas supply unit 14 that supplies, for example, argon gas into the furnace tube 12. As a result, a furnace atmosphere is set to Ar, He, N₂, or a mixed gas atmosphere thereof. It is noted that the drawing furnace 11 may be a resistance furnace or an induction furnace.

An upper portion of the optical fiber preform G is held by a preform feeding unit F, and the optical fiber preform G is fed into the furnace tube 12 by the preform feeding unit F. When a lower end portion of the optical fiber preform G is heated and drawn downward by the heating element 13, a glass fiber G1 that is a constituent member of an optical fiber G2 is formed.

The optical fiber manufacturing apparatus 10 includes a cooling unit 15 on the downstream side of the drawing furnace 11. For example, coolant gas of helium gas is supplied to the cooling unit 15, and the glass fiber G1 drawn from the optical fiber preform G is cooled by the cooling unit 15.

The optical fiber manufacturing apparatus 10 includes an outer diameter measuring unit 16 on the downstream side of the cooling unit 15. The outer diameter measuring unit 16 is configured to measure an outer diameter of the glass fiber G1, for example, using laser light, an outer diameter of the glass fiber G1 cooled by the cooling unit 15 is measured by the outer diameter measuring unit 16, and the glass fiber G1 is fed downward. It is noted that the outer diameter measuring unit 16 may be a measuring type using means other than laser light as long as it can measure the outer diameter of the glass fiber G1 in a contactless manner.

The optical fiber manufacturing apparatus 10 according to the present embodiment includes an UV resin application device 17a and an UV curing furnace 17b on the downstream side of the outer diameter measuring unit 16. For example, a urethane acrylate resin that is an ultraviolet curable resin (also referred to as an UV resin) is applied by the UV resin application device 17a to the glass fiber G1 of which the outer diameter is measured, and the urethane acrylate resin is irradiated with the ultraviolet light to cure the resin in the UV curing furnace 17b. As a result, the optical fiber G2 where the resin layer is formed around the glass fiber G1 is obtained. However, in the curing step, it is difficult for the drawing tower where the space is limited as described above to include the UV curing furnace 17b for performing sufficient ultraviolet irradiation. The resin applied to the optical fiber G2 in this state is assumed to be in a semi-cured state.

It is noted that a drawing tower 20 in the present embodiment refers to a device including a series of steps until the optical fiber G2 is formed. In addition, in the above description, as a configuration of a general drawing tower, the drawing tower 20 includes the UV resin application device 17a and the UV curing furnace 17b. Unlike the UV curing furnace 17b in the drawing tower 20, an ultraviolet light irradiation device 32 according to the present disclosure irradiates the optical fiber G2 transmitted from the drawing tower 20 with ultraviolet light.

In addition, in another embodiment, a plurality of the ultraviolet light irradiation devices 32 according to the present disclosure can also be provided without providing the UV curing furnace 17b in the drawing tower 20.

The UV resin application device 17a will be further described. The UV resin application device 17a is a device for applying an uncured ultraviolet curable resin for forming a first coating 52 and a second coating 54 illustrated in FIG. 2 to the surface of the glass fiber G1. In the present embodiment, a double coating die where two coating dies are provided to overlap each other is used as the UV resin application device 17a.

It is assumed that the UV resin application device 17a includes the coating dies for applying the resin to form the first coating 52 (primary: a coating obtained by curing the inner-layer resin) on the upstream side and to form the second coating 54 (secondary: a coating obtained by curing the outer-layer resin) on the downstream side.

First, the uncured ultraviolet curable resin for forming the first coating 52 is applied to the surface of the glass fiber G1 by the coating die on the upstream side, and the uncured ultraviolet curable resin for forming the second coating 54 is applied to the outer surface of the first coating 52 by the coating die on the downstream side. As a result, the glass fiber G1 on which both the first coating 52 and the second coating 54 are applied in the uncured state as illustrated in FIG. 2 is obtained.

Next, the glass fiber G1 passes through the UV curing furnace 17b in the drawing tower 20, and the resin of the first coating 52 and the second coating 54 is cured. This way, after obtaining the optical fiber G2 where the resin layer is formed around the glass fiber G1, the optical fiber G2 is transmitted to the next step from the drawing tower 20.

The optical fiber G2 is transmitted from the drawing tower 20, and the drawn optical fiber G2 is disposed in all the steps of the traveling path after the ultraviolet light irradiation device 32. Next, the position of the drawn optical fiber G2 is verified. Next, the ultraviolet light irradiation device 32 operates from the position where the traveling path is exposed to the position where the ultraviolet light irradiation device 32 surrounds the optical fiber taken out downward from a coating device including the UV resin application device 17a and the UV curing furnace 17b, and irradiates the optical fiber G2 with ultraviolet light.

It is noted that the operation described herein is not limited as long as it can realize both the state where the traveling path is exposed and the state where the ultraviolet light irradiation device surrounds the traveling path and irradiates the traveling path with ultraviolet light. For example, in the ultraviolet light irradiation device formed of two half-tubular housings, the traveling path is exposed in the halved state, and the pivotable opening and closing operation or the linear operation using a guide or the like where the traveling path is irradiated with ultraviolet light in a state where both of the half-tubular housings are combined may be performed.

In general, the curing of the optical fiber G2 is completed at this time, and in order to prevent deformation of the outer periphery from occurring in the subsequent steps, it is necessary to alleviate the linear velocity or to improve the power of the light source such as an LED.

On the other hand, in the present embodiment, the ultraviolet light irradiation device 32 described below is provided for the next step of the drawing tower 20. Therefore, for example, even when the resin is semi-cured, the first coating 52 and the second coating 54 can be reliably cured in the next step.

Regarding the ultraviolet irradiation after the drawing tower 20, most part of the resin and the secondary resin of the second coating 54 are cured by the light source installed in the tower. When the curing of the primary resin of the first coating 52 is performed, the curing can be performed in a non-contact state with oxygen even without performing nitrogen purge or the like. Therefore, the irradiation in air can be performed.

It is noted that, in the present embodiment, the ultraviolet light irradiation device 32 is provided direct under the drawing tower 20, but the ultraviolet light irradiation device 32 is provided separately from the drawing tower 20. Therefore, a plurality of the ultraviolet light irradiation devices 32 can be disposed not only at the direct-under position but also at a position directly before a bobbin B that is the winding-up drum as disclosed in Patent Literature 1 or at spacious positions of the traveling path between a direct-under roller 34 and the bobbin B.

The optical fiber manufacturing apparatus 10 includes the direct-under roller 34 and, for example, nine guide rollers 36a to 36i on the downstream side of the drawing tower 20. The direct-under roller 34 is disposed directly under the drawing tower 20 and the ultraviolet light irradiation device 32, and a traveling direction of the optical fiber G2 is changed from the vertical direction to, for example, the horizontal direction.

The optical fiber G2 of which the traveling direction is changed by the direct-under roller 34 is guided to each of the guide rollers 36a to 36i, and the traveling direction is changed from the horizontal direction to, for example, an obliquely upward direction by the guide roller 36i positioned on the most downstream side.

The optical fiber manufacturing apparatus 10 further includes a take-up device 40, a guide roller 41, a dancer roller 42, and a winding-up device 43 on the downstream side of the guide roller 36i. The optical fiber G2 is taken up by a capstan of the take-up device 40 at a predetermined speed, and is wound around the bobbin B of the winding-up device 43 through the dancer roller 42.

It is noted that the take-up device 40 corresponds to the take-up unit according to the present disclosure. The take-up device is a device that initially pulls the optical fiber G2 where the resin layer is formed around the glass fiber G1.

### Description of One Embodiment of Ultraviolet Light Irradiation Device

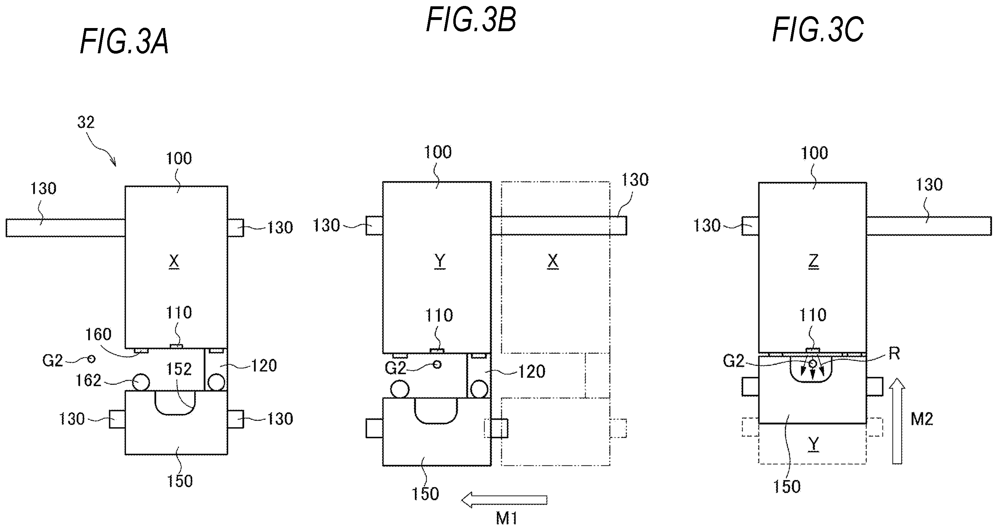

Next, one embodiment of the ultraviolet light irradiation device of the apparatus for manufacturing an optical fiber according to the present disclosure will be described. FIGS. 3A to 3C are configuration diagrams illustrating an ultraviolet light irradiation device according to one aspect of the present disclosure, which illustrates the ultraviolet light irradiation device 32 disposed in the direct-under direction from the drawing tower 20 side of FIG. 1. FIG. 3A illustrates the overall configuration of the ultraviolet light irradiation device 32, and FIGS. 3B and 3C illustrate the aspect of the movement (operation). It is noted that, in FIGS. 3A to 3C, the mechanisms and the like in the traveling path of the optical fiber G2 are not illustrated, and the relationship between the optical fiber G2 and the ultraviolet light irradiation device 32 is schematically illustrated.

The movement (operation) aspect illustrated in FIGS. 3A to 3C is one example of the operation of performing two linear movements perpendicular to each other, in which a rectangular parallelepiped housing provided with an ultraviolet light source therein is halved in the vertical direction along the drawing, the ultraviolet light irradiation device is moved to the position of the drawn optical fiber in the halved state, and the ultraviolet light irradiation device is moved to close the halved portions and to surround the optical fiber. Hereinafter, the details will be described.

First, the configuration of the ultraviolet light irradiation device 32 will be described. The ultraviolet light irradiation device 32 includes an LED irradiation device 100 and a mirror unit 150. The LED irradiation device 100 can be a housing including, on one side surface, an LED element 110 that irradiates the optical fiber G2 with ultraviolet light.

As a cooling method of the LED element 110, air cooling is desirable because a water cooling method requires a cooling pipe and is not suitable for a narrow space. It is noted that, in order to adjust an ultraviolet irradiation position, the LED irradiation device 100 preferably includes a mechanism for finely adjusting the horizontal position and a mechanism for adjusting perpendicularity to the fiber.

The LED irradiation device 100 includes a first rail guide 120, a second rail guide 130, and a ball catcher 160 used for a movement described below and for coupling with the mirror unit 150.

The mirror unit 150 includes a mirror 152 at a position facing the LED element 110 of the LED irradiation device 100. As the mirror 152, a concave mirror that is curved such that ultraviolet light emitted form the LED element 110 is converged into the optical fiber G2.

In addition, for coupling with the LED irradiation device 100 and confirmation of the mutual positional relationship, the mirror unit 150 includes the first rail guide 120 that cooperates with the LED irradiation device 100, a second rail guide 130, and balls 162 corresponding to the ball catcher 160.

Next, the movement aspect will be described sequentially with reference to FIGS. 3A to 3C.

A state of X in FIG. 3A illustrates a state where the drawing is started, the optical fiber G2 is transmitted from the drawing tower 20, and the traveling path is determined. At this time, the ultraviolet light irradiation device 32 is at a position distant from the drawn optical fiber G2, and the state of the drawn optical fiber G2 can be visually recognized.

After verifying the drawn state of the optical fiber G2, the LED irradiation device 100 moves in an arrow M1 direction along the second rail guide 130 as a guide as illustrated in FIG. 3B, and transitions from the state of X to the state of Y. In the state of Y, the optical fiber G2 confronts the LED element 110. Since the relative position between the optical fiber G2 and the LED irradiation device 100 is already known, the device and the like do not come into contact with the optical fiber G2.

Next, as illustrated in FIG. 3C, after the LED irradiation device 100 moves to the position where the optical fiber G2 and the LED element 110 confront each other, the mirror unit 150 moves in an arrow M2 direction along the first rail guide 120 as a guide, and transitions from the state of Y to the state of Z. Next, through the fine adjustment of the mirror unit 150, the optical fiber G2 is irradiated with ultraviolet light R from the LED irradiation device 100 to cure the resin.

It is noted that, in the present embodiment, a mechanism for enabling the ball catcher 160 to catch the balls 162 is provided to reliably perform the movement to the confronting position.

This way, the ultraviolet light irradiation device 32 according to the present embodiment is formed of the LED irradiation device 100 and the mirror unit 150, and the mirror unit 150 includes a mechanism for opening and closing through a sliding mechanism. Further, a base including the sliding mechanism for the adjustment is provided over the entire ultraviolet light irradiation device 32, and when the LED irradiation device 100 may interfere with the optical fiber G2, the LED irradiation device 100 can move to the state of X as a stand-by position to avoid the interference.

It is noted that the aspect of the present disclosure is not limited to the above-described embodiments, and modifications can be made within a range not departing from the scope of the present disclosure. For example, as the operation of the ultraviolet light irradiation device 32, not only the linear sliding operation but also the pivoting operation or the like can be applied. Further, the ultraviolet light irradiation device according to the present disclosure is configured as a separate unit from the drawing tower. Therefore, the ultraviolet light irradiation device can be appropriately disposed at position where the space can be ensured and the resin can be efficiently cured in the traveling path after the drawing tower. Further, an aspect where a plurality of the ultraviolet light irradiation devices 32 according to the present disclosure are provided without installing an UV curing furnace of the drawing tower can also be adopted.

### REFERENCE SIGNS LIST

10: optical fiber manufacturing apparatus
11: drawing furnace
12: furnace tube
13: heating element
14: gas supply unit
15: cooling unit
16: outer diameter measuring unit
17a: UV resin application device
17b: UV curing furnace
20: drawing tower
32: ultraviolet light irradiation device
52: first coating
54: second coating
100: LED irradiation device
110: LED element
120: first rail guide
130: second rail guide
150: mirror unit
160: ball catcher
162: ball
34: direct-under roller
36a to 36i: guide roller
40: take-up device
41: guide roller
42: dancer roller
43: winding-up device
F: preform feeding unit
G: optical fiber preform
G1: glass fiber
G2: optical fiber
B: bobbin

## Claims

1. An apparatus for manufacturing an optical fiber, the apparatus comprising:
a drawing tower including: a drawing furnace configured to heat an optical fiber preform; and an application unit configured to apply an ultraviolet curable resin to the drawn glass fiber;
a direct-under roller configured to change a direction of a traveling path of the applied optical fiber;
a plurality of guide rollers configured to guide each of the optical fibers transmitted from the direct-under roller;
an ultraviolet light irradiation device configured to irradiate the applied ultraviolet curable resin with ultraviolet light to cure the ultraviolet curable resin; and
a take-up unit configured to take up the optical fiber guided by the guide roller,
wherein the ultraviolet light irradiation device is disposed downstream of the drawing tower, and operates to form a state where the traveling path is exposed and a state where the ultraviolet light irradiation device surrounds the traveling path and irradiates the traveling path with ultraviolet light.

2. The apparatus for manufacturing an optical fiber according to claim 1, wherein
the ultraviolet light irradiation device is disposed upstream of the direct-under roller.

3. The apparatus for manufacturing an optical fiber according to claim 1, wherein
the ultraviolet light irradiation device is disposed downstream of the direct-under roller.

4. The apparatus for manufacturing an optical fiber according to any one of claims 1 to 3, wherein
in the operation, the ultraviolet light irradiation device is movable between a position surrounding the traveling path and a position where the traveling path is exposed.

5. The apparatus for manufacturing an optical fiber according to any one of claims 1 to 3, wherein
the ultraviolet light irradiation device is formed of two half-tubular housings, the traveling path is exposed in a halved state, and the ultraviolet light irradiation device operates to be pivotably opened and closed to irradiate the traveling path with ultraviolet light in a state where both of the half-tubular housings are combined.

6. The apparatus for manufacturing an optical fiber according to any one of claims 1 to 3, wherein
the ultraviolet light irradiation device includes an ultraviolet light source and a mirror, and
the ultraviolet light source and the mirror are disposed such that the optical fiber of the traveling path is capable of being irradiated with ultraviolet light from all directions.

7. The apparatus for manufacturing an optical fiber according to any one of claims 1 to 3, wherein
an ultraviolet light source of the ultraviolet light irradiation device is a light emitting diode.

8. A method for manufacturing an optical fiber using an apparatus for manufacturing an optical fiber including: a drawing furnace configured to heat an optical fiber preform; a coating device configured to coat the drawn glass fiber with a resin; a direct-under roller configured to change a direction of a traveling line of the coated optical fiber; a plurality of guide rollers configured to guide each of the optical fibers transmitted from the direct-under roller; and a take-up device configured to take up the optical fiber guided by the guide roller in this order, the method comprising:
disposing the drawn optical fiber in all steps of a traveling path of the apparatus for manufacturing an optical fiber, operating an ultraviolet light irradiation device such that the ultraviolet light irradiation device surrounds the optical fiber taken out downward from the coating device, and irradiating the optical fiber with ultraviolet light.
